# EUROPÄISCHE PATENTSCHRIFT

(11) **EP 0 674 982 B1**
(45) Veröffentlichungstag und Bekanntmachung des Hinweises auf die Patenterteilung: **30.06.1999**
(21) Anmeldenummer: 95103659.9
(22) Anmeldetag: 14.03.1995
(51) Int. Cl.: B29B 9/06, B26D 7/22, F16P 3/00

(54) **Granuliervorrichtung für Strangmaterialien**
Granulator device for filamentary material
Dispositif de granulation pour matériau filiforme

(30) Priorität: 30.03.1994 DE 4411165; 28.12.1994 DE 4446989
(43) Veröffentlichungstag der Anmeldung: 04.10.1995
(73) Patentinhaber: Rieter Automatik GmbH, D-63757 Grossostheim (DE)
(72) Erfinder: Locker, Peter, D-63762 Grossostheim (DE); Pirrung, Walter, D-63762 Grossostheim (DE)
(74) Vertreter: Bardehle, Heinz, Dipl.-Ing.

(56) Entgegenhaltungen:
- EP-A- 0 615 785
- DE-A- 2 821 591
- DE-C- 2 460 484
- US-A- 3 897 016
- PATENT ABSTRACTS OF JAPAN vol. 13, no. 334 (M-855) 27. Juli 1989 & JP-A-01 111 609 (NIPPON KINSEN KIKAI K.K.) 28. April 1989

## Beschreibung

Die Erfindung bezieht sich auf eine Granuliervorrichtung fuhr Strangmaterialien mit einer Einzugsvorrichtung zum Zuführen des durch einen Einlaufschacht geleiteten Strangmaterials und dessen Förderung zu einer Messerwalze zum Zerschneiden des Strangmaterials zu Granulat und mit einer in der Einzugsvorrichtung enthaltenen Einzugswalze und einer Gegenwalze, von denen mindestens eine antreibbar ist und beide einen Walzenspalt zum Einziehen des Strangmaterials bilden.

Eine derartige Granuliervorrichtung ist in der DE-PS 29 01 018 beschrieben. Bei dieser Granuliervorrichtung besteht die Einzugsvorrichtung aus einer Oberwalze und einer Unterwalze, wobei die Halterung für die Lager der Oberwalze in Richtung auf die Unterwalze auf feste Werte des von den beiden Walzen gebildeten Spaltes eingestellt werden kann.

Bei einer derartigen Granuliervorrichtung ist dafür zu sorgen, daß im Betrieb das Bedienungspersonal nicht gefährdet werden kann. Hierzu sind im Zusammenhang mit aus zwei Walzen bestehenden Walzwerken bereits verschiedene Maßnahmen vorgeschlagen worden. Gemäß der DE-PS 646199 wird im Zusammenhang mit Walz- und Reißwerken der Gefahrenbereich einem elektromagnetischen Wechselfeld ausgesetzt, so daß bei Hantieren in dem Gefahrenbereich dieses Wechselfeld einer Empfangsvorrichtung zugeführt wird, die mit einer Alarmeinrichtung und/oder einem Schaltwerk zum Stillsetzen der Maschine verbunden ist. Eine ähnliche Anordnung zeigt die DE-OS 42 35 161, bei der auf einen Gefahrenbereich vor einem Walzwerk ein Feld elektrischer Wellen gerichtet ist, das bei Eindringen einer Bedienungsperson in dieses Feld einen Sensor auslöst, der ein Signal insbesondere zum Abschalten der Maschine bewirkt.

Der Erfindung liegt die Aufgabe zugrunde, eine sich an einen Gefahrenbereich der eingangs erwähnten Granuliervorrichtung z.B. mit einer Hand annähernde Bedienungsperson davor zu schützen, in den eigentlichen Gefahrenbereich einzudringen. Erfindungsgemäß geschieht dies dadurch, daß im Bereich des Einlaufschachtes, insbesondere vor dessen Eingang, ein Annäherungsschaltorgan angeordnet ist, das bei seiner Betätigung eine Festlegung des Walzenspaltes aufhebt und den Walzenspalt so weit vergrößert, daß das weitere Einziehen des Strangmaterials schlagartig gestoppt ist.

Durch das Annäherungsschaltorgan und seine Betätigung, z.B. durch eine das Annäherungsschaltorgan verschiebende Hand einer Bedienungsperson, wird über die dadurch bewirkte Vergrößerung des Walzenspaltes unter Aufhebung des Zugs auf das Strangmaterial und das hierdurch verursachte sofortige Stoppen des weiteren Einziehens des Strangmaterials erreicht, daß das Strangmaterial aufgrund seines sofortigen Stillstandes keine Reibung auf eine Hand besonders bei ihrer Umschlingung bewirken kann, so daß eine Verletzung der Hand durch deren Mitnahme in das Innere des Einlaufschachtes mit Sicherheit vermieden ist. Außerdem ergibt sich durch diese Art der Verhinderung einer Mitnahme der Hand einer Bedienungsperson die Möglichkeit, die Granuliervorrichtung selbst ohne Gefährdung der Bedienungsperson weiterlaufen zu lassen, deren schnelle Stillsetzung, wie dies im Stand der Technik vorgeschlagen wird, meist darum schwierig bzw. sogar unmöglich ist, weil die stillzusetzenden Walzen und ihre Antriebsorgane eine ganz erhebliche Masse aufweisen. Abgesehen davon kann eine besonders schnelle Stillsetzung derartiger Walzen auch zu deren Beschädigung führen. Der bei der erfindungsgemäßen Lösung ermöglichte ungehinderte Weiterlauf der Maschine läßt im eigentlichen Maschinenbereich also keinerlei Probleme entstehen, wobei jedoch durch die schlagartige Vergrößerung des Walzenspaltes das weitere Einziehen des Strangmaterials problemlos entsprechend schnell gestoppt werden kann. Die Vergrößerung des Walzenspaltes ist dabei insofern eine vorteilhafte Maßnahme, weil es sich dabei um keine Bewegungen über größere Längen handelt, da bereits mit dem Abheben der einen Walze von dem Strangmaterial der Berührungskontakt mit dem Strangmaterial aufgehoben und somit der Einzug des Strangmaterials von diesem Augenblick an beendet wird.

Zweckmäßig gestaltet man die Vorrichtung so, daß das Annäherungsschaltorgan mit dem Einlaufschacht in Verbindung steht, der einen Sicherheitsabstand zwischen der Einzugsvorrichtung und dem Annäherungsschaltorgan bestimmt. Der Einlaufschacht bildet somit entweder einen Träger für das Annäherungsschaltorgan, es ist aber auch möglich, den Einlaufschacht selbst als Annäherungsschaltorgan auszubilden. Eine weitere Möglichkeit der Gestaltung des Annäherungsschaltorgans besteht darin, dieses als den Einlaufschacht im wesentlichen umfassender, in Schaltrichtung verschiebbarer Rahmen auszubilden, der z.B. durch die Hand einer Bedienungsperson verschoben werden kann und damit dann die Vergrößerung des Walzenspaltes bewirkt.

Eine vorteilhafte Gestaltungsmöglichkeit für das Zusammenwirken von Annäherungsschaltorgan und den Walzen besteht darin, die Einzugsvorrichtung mit einer verschiebbaren Einzugswalze zu versehen, die in ihre Parallelverschiebung ermöglichenden Verschiebungslagern gelagert ist, wobei die Verschiebungslager gegen einen Anschlag durch eine Vorspannung angedrückt werden, die durch das Annäherungsschaltorgan derart auslösbar ist, daß bei Betätigung des Annäherungsschaltorgans die Vorspannung abgeschaltet und eine Gegenkraft wirksam wird, die die Verschiebungslager vom Anschlag und damit die verschiebbare Einzugswalze von der Gegenwalze abhebt. Durch das Zusammenwirken der auf die Verschiebungslager wirkenden Vorspannung und der Abschaltung bei Betätigung des Annäherungsschaltorgans, wird schlagartig die Gegenkraft wirksam, die dann schlagartig die verschiebbare Einzugswalze von der Gegenwalze abheben kann.

Eine zweckmäßige Gestaltung für die Verschiebungslager läßt sich dadurch erzielen, daß die Verschiebungslager als Schwingen ausgebildet sind, auf die je eine von dem Annäherungsschaltorgan steuerbare Kolbenzylinder-Einheit wirkt.

Die Ausbildung der Verschiebungslager als Schwingen stellt eine konstruktiv einfache Lösung für die notwendige Verschiebung der betreffenden Einzugswalze dar, bei der sonst notwendige, aufwendigere Schlittenführungen vermieden werden. In diesem Zusammenhang ist auch noch darauf hingewiesen, daß die durch die steuerbare Kolbenzylinder-Einheit aufgebrachte Vorspannung auch durch das Gewicht der Schwingen und der auf diesen gelagerten Einzugswalze erzeugt werden kann, wenn dieses Gewicht für den Andruck der einzuziehenden Stränge gegen die andere Einzugswalze ausreicht. In diesem Falle kann die steuerbare Kolbenzylinder-Einheit entfallen.

Für die Erzeugung der Gegenkraft sieht man zweckmäßig eine dem Anschlag benachbart angeordnete Feder vor, die durch eine Kraft von der Vorspannung überwunden wird. Wenn die Vorspannung aufgrund der Auslösung durch das Annäherungsschaltorgan dann wegfällt, wird sofort die Kraft der Feder zum Abheben der verschiebbaren Einzugswalze wirksam.

Eine weitere vorteilhafte Möglichkeit des Abhebens der einen Einzugswalze von der anderen Einzugswalze besteht darin, das Annäherungsschaltorgan mit auf die Walzen zulaufenden Keilstücken zu verbinden, die bei Verschiebung des Annäherungsschaltorgans in Richtung zur Einzugsvorrichtung zwischen die Walzen bzw. der Wellen drücken und den Berührungskontakt des Strangmaterials mit mindestens einer Walze aufheben. Es handelt sich hierbei also um eine rein mechanisch wirkende Gestaltung, bei der das betätigte Annäherungsschaltorgan direkt über die Keilstücke auf die Walzen in dem Sinne einwirkt, daß diese voneinander entfernt werden. Im Falle der Gestaltung des Einlaufschachtes als Annäherungschaltorgan können die Keilstücke direkt mit dem Einlaufschacht verbunden werden, bei dessen Verschieben z.B. durch die Hand einer Bedienungsperson dann direkt die Keilstücke zwecks Entfernung der Einzugswalzen betätigt wird.

Um dem Eingriff der Keilstücke eine Begrenzung zu geben, wird zweckmäßig ein Anschlag vorgesehen, so daß bei Eingriff der Keilstücke zwischen die Walzen die angetriebene Walze die Keilstücke nur bis zu diesem Anschlag weiterführen kann.

Um eine sichere Mitnahme der Keilstücke zu gewährleisten, sind diese zweckmäßig auf jeder der angetriebenen Walze zuweisenden Seite mit einer Oberflächenstruktur versehen, die form- bzw. reibschlüssig zu der Oberfläche der angetriebenen Walze paßt, wobei bei Erreichen des Anschlages der Form- bzw. Reibschluß zwischen der Oberflächenstruktur und der betreffenden Oberfläche der angetriebenen Walze aufgehoben ist.

Eine weitere zweckmäßige Gestaltung der Verbindung des Annäherungsschaltorgans mit der Einzugsvorrichtung besteht darin, daß das Annäherungsschaltorgan mit Hebeln derartig in Verbindung steht, daß deren eines Ende von dem Annäherungsschaltorgan auf die angetriebene Walze zubewegbar ist, von der diese Hebelenden bei Berührung mit der angetriebenen Walze in Richtung zum Walzenspalt verschwenkt werden und dabei über einen Eingriff der Hebel in die Lagerung der nichtangetriebenen Walze diese von der angetriebenen Walze abhebt.

Wie bei der Gestaltung der oben erwähnten Keilstücke kann man auch die Hebelenden mit einer Oberflächenstruktur versehen, die derart form- bzw. reibschlüssig zu der Oberfläche der angetriebenen Walze paßt, daß bei Eingriff der Hebelenden in die angetriebene Walze diese die Hebelenden bis zu einem Anschlag weiterschwenkt.

Ausführungsbeispiele der Erfindung sind in den Figuren dargestellt. Es zeigen:
- Fig. 1: Eine Ausführungsform mit unter einer Vorspannung stehender nicht angetriebener Walze,
- Fig. 2: eine Ausführungsform mit Keilstücken,
- Fig. 3: eine Draufsicht auf die Anordnung gemäß Figur 2,
- Fig. 4-6: drei Phasen des Einziehens der Keilstücke in das Einzugswerk,
- Fig. 7: eine Ausführungsform mit Hebeln zum Abheben der nicht angetriebenen Walze von der angetriebenen Walze,
- Fig. 8-10: drei Phasen des Einschwenkens der Hebel.

In den Figuren sind Ausführungsbeispiele der Erfindung dargestellt.

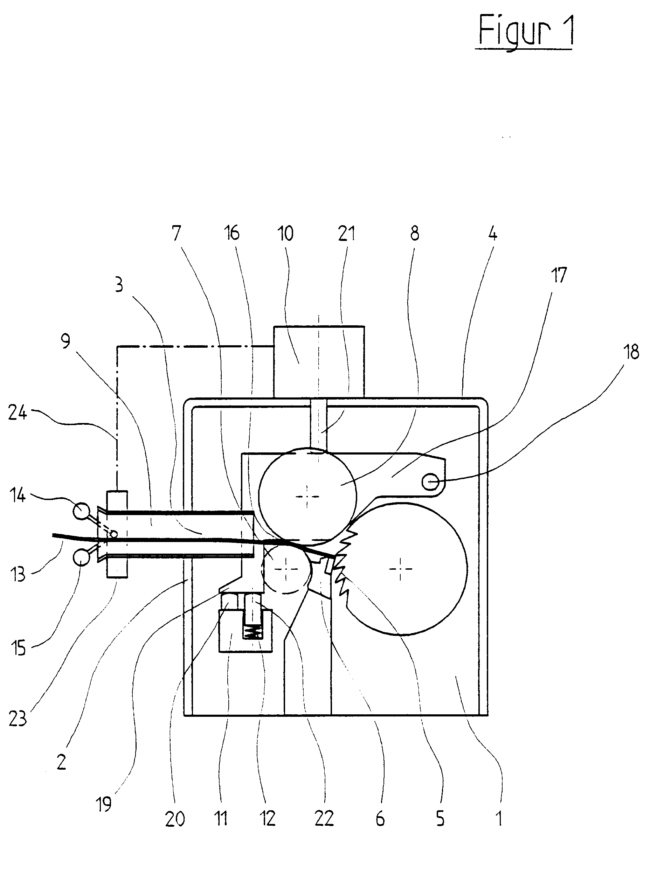

Die Figur 1 zeigt die Granuliervorrichtung in Seitensicht, wobei durch Weglassung einer vorderen Seitenwand die inneren Organe der Granuliervorrichtung zu sehen sind. Dargestellt ist die hintere Seitenwand 1, auf der der Deckel 4 aufliegt. An der Vorderseite der Granuliervorrichtung wird diese durch die Frontplatte 2 abgeschlossen. Die Frontplatte wird durch den Einlaufspalt 3 durchbrochen, durch den die Stränge 13 der Granuliervorrichtung zugeführt werden. In den Einlaufspalt 3 ist der sich von der Frontplatte 2 wegerstreckende Einlaufschacht 9 eingesetzt, der die Stränge 13 führt. An dem der Frontplatte 2 abgewandten Ende des Einlaufschachtes 9 sind die beiden Annäherungsschalter 14 und 15 angebracht, auf die weiter unten näher eingegangen wird.

Im Inneren der Granuliervorrichtung ist eine Einzugsvorrichtung vorgesehen, die aus der verschiebbaren Einzugswalze 8 und der Gegenwalze 7 besteht. Einzugswalze 8 und Gegenwalze 7 klemmen die ihnen zugeführten Stränge 13 in dem zwischen ihnen ausgebildeten Walzenspalt 16 ein und bewirken aufgrund eines Antriebs, der üblicherweise auf eine der beiden Walzen wirkt, ein klemmendes Erfassen der Stränge 13 und damit deren Vorschub in Richtung zu dem Gegenmesser 6, das mit der Messerwalze 5 in bekannter Weise zusammenwirkt. Mittels des Gegenmessers 6 und der Messerwalze 5 werden die zugeführten Stränge 13 zu Granulat zerschnitten.

Die Messerwalze 5 und die Gegenwalze 7 sind in bekannter Weise an den Seitenwänden der Granuliervorrichtung gelagert, von denen, wie oben gesagt, nur die hintere Seitenwand 1 dargestellt ist. Die verschiebbare Einzugswalze 8 ist auf ihren beiden Seiten auf über die Achse 18 parallel verdrehbaren Schwingen gelagert, von denen hier nur die hintere Schwinge 17 dargestellt ist und die somit eine Parallelverschiebung der Einzugswalze 8 ermöglichen. Eine entsprechende Schwinge ist auf der gegenüberliegenden Stirnseite der verschiebbaren Einzugswalze 8 vorgesehen (in der Figur nicht eingezeichnet). Die Schwinge 17 geht in die nach unten weisende Verlängerung 19 über, die auf dem Anschlag 20 aufsitzt. Der Anschlag 20 ist an dem Halter 11 angebracht, der an der hinteren Seitenwand 1 befestigt ist. Ein entsprechender Halter 11 mit Anschlag 20 existiert auf der gegenüberliegenden Seite an der nicht dargestellten vorderen Seitenwand. Aufgrund dieser Anordnung besitzt die Schwinge 17 und damit die verschiebbare Einzugswalze 8 eine definierte Endlage, durch die ein entsprechend eingestellter Walzenspalt 16 bestimmt wird. Für eine Justierung der Breite des Walzenspaltes 16 kann man eine Verschiebbarkeit des Anschlages 20 vorsehen.

Auf die Schwinge 17 drückt der Stößel 21 der Kolbenzylinder-Einheit 10, die hier pneumatisch angetrieben wird. Aufgrund des von der Kolbenzylinder-Einheit 10 über den Stößel 21 auf die Schwinge ausgeübten Druckes wird die Schwinge in ihre durch den Anschlag 20 und die Verlängerung 19 gegebenen definierten Lage vorgespannt. Dabei wirkt die Kolbenzylinder-Einheit 10 wie eine Feder, sodaß z.B. im Falle des Durchlaufs von verdickten Strängen 13 die verschiebbare Einzugswalze 8 gegen den Druck aus der Kolbenzylinder-Einheit 10 zurückweichen kann.

Die Verlängerung 19 drückt auf das Zwischenstück 22, das seinerseits auf die in einer Bohrung im Halter 11 gelagerte Feder 12 drückt. Die Feder 12 ist so dimensioniert, daß ihre Kraft von der Kolberzylinder-Einheit 10 aufgebrachten Spannung überwunden wird. Dies bedeutet, daß in der Figur dargestellten Betriebslage unter der Wirkung der Kolbenzylinder-Einheit 10 die Verlängerung 19 gegen den Anschlag 20 drückt.

Um nun eine Bedienungsperson, die an der der Frontplatte 2 zugewandten Seite der Granuliervorrichtung hantiert, vor der Gefahr zu schützen, z.B. mit einer Hand in den Einzugsschacht 9 aufgrund des Laufs der Stränge 13 hineingezogen zu werden, sind die Annäherungsschalter 14 und 15 (Annäherungsschaltorgan) vorgesehen. Die Annäherungsschalter sind, wie oben bereits gesagt, an dem der Frontplatte 2 abgewandten Ende des Einzugsschachtes 9 angebracht. Sie sind durch Drehhebel gebildet, die auf Ventile in dem Ventilgehäuse 23 wirken. Wenn also eine Bedienungsperson z.B. mit der Hand auf einen der Annäherungsschalter 14 und 15 trifft und diesen dabei verdreht, so wird hierdurch eine entsprechende Betätigung eines Ventils im Ventilgehäuse 23 bewirkt. Die Ventile des Ventilgehäuses 23 stehen über die gestrichelt gezeichnete Steuerleitung 24 mit der Zuleitung für das Druckmedium zur Betätigung der Kolbenzylinder-Einheit 10 in Verbindung und haben folgende Wirkung : Normalerweise lassen die Annäherungsschalter 14 und 15 das Druckmedium in die Kolbenzylinder-Einheit 10 gelangen, so daß diese in der oben beschriebenen Weise die Schwinge 17 und damit die verschiebbare Einzugswalze 8 vorgespannt halten kann. Durch Betätigung eines der Annäherungsschalter 14 und 15 wird der von dem Druckmedium, insbesondere Luft, auf die Kolbenzylinder-Einheit 10 ausgeübte Druck weggenommen, so daß die von dem Stößel 21 ausgeübte Druckkraft und damit die Spannung von der Schwinge 17 genommen wird. Die Folge davon ist, daß nunmehr die Kraft der Feder 12 wirksam wird und über das Zwischenstück 22 die Verlängerung 19 und damit die Schwinge 21 vom Anschlag 20 abhebt, wodurch sich der Walzenspalt 16 so erweitert, daß auf die Stränge 13 von der verschiebbaren Einzugswalze 8 und der Gegenwalze 7 keine Zugkraft mehr ausgeübt werden kann. Die Vorwärtsbewegung der Stränge 13 wird damit schlagartig gestoppt, sodaß von den Strängen mittels Reibung keinerlei Zug auf irgendwelche Gegenstände vor dem Einlaufschacht mehr ausgeübt werden kann. Eine Bedienungsperson wird damit schlagartig aus der Gefahr gebracht, von den sonst sich fortbewegenden Strängen 13 irgendwie mitgenommen zu werden.

Es sei noch darauf hingewiesen, daß anstelle der Feder 12 auch eine weitere Kolbenzylinder-Einheit treten kann, die im Sinne der Feder 12 wirkt. Eine solche weitere Kolbenzylinder-Einheit müßte dann bei Abschaltung der Kolbenzylinder-Einheit 10 sofort über die Annäherungsschalter 14 und 15 eingeschaltet werden, um das vorstehend beschriebene Abheben der verschiebbaren Einzugswalze 8 zu bewirken.

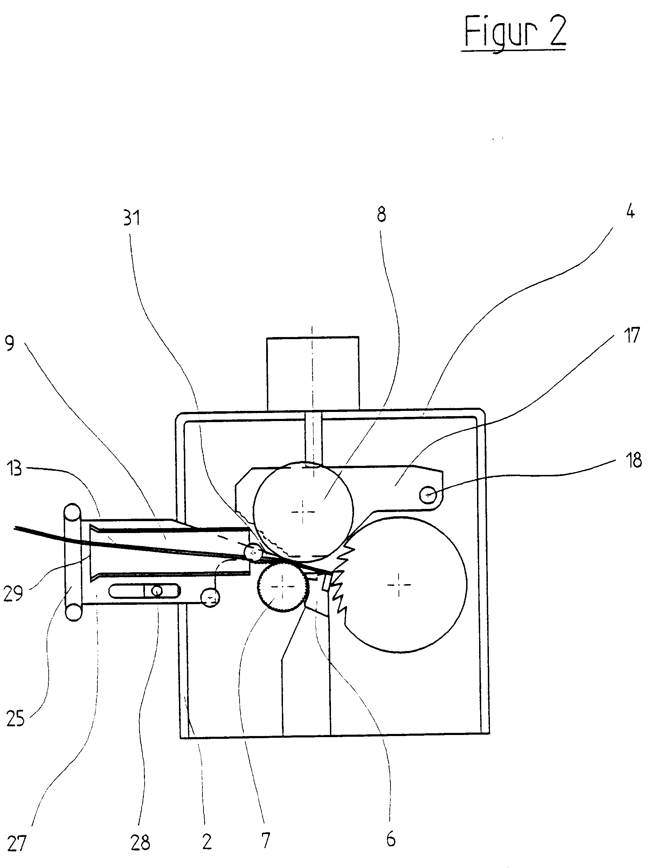

Figur 2 zeigt eine Granuliervorrichtung in Seitensicht, in der für den Granuliervorgang die gleichen Bauteile vorgesehen sind wie beim Gegenstand der Figur 1, so daß diesbezüglich auf die Erläuterungen zu Figur 1 verwiesen werden kann. Unterschiedlich gegenüber der Ausführungsform nach Figur 1 ist bei der Gestaltung nach Figur 2 die Methode der Vergrößerung des Walzenspaltes 16.

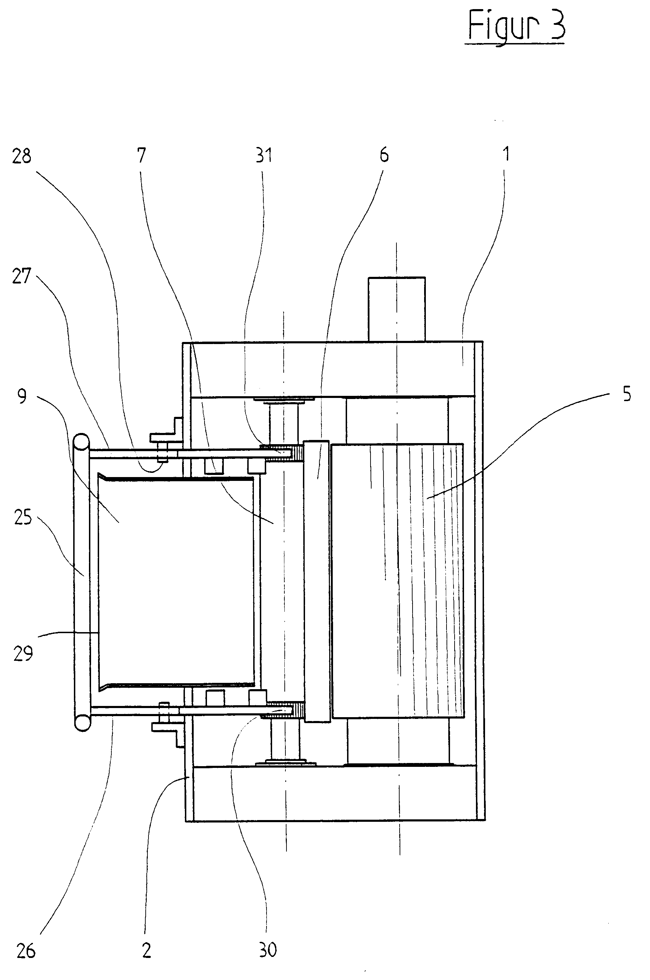

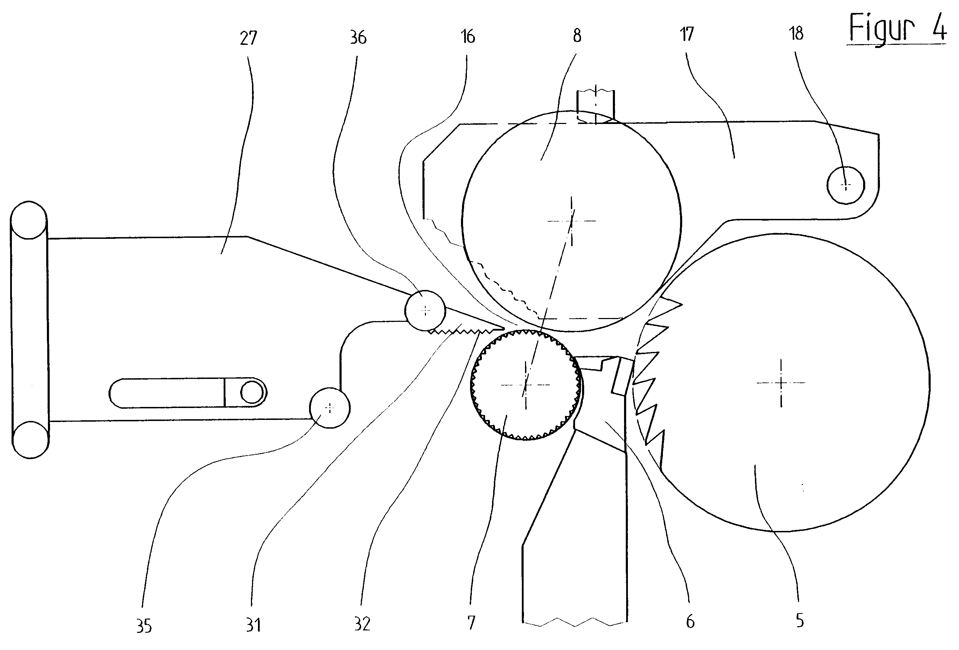

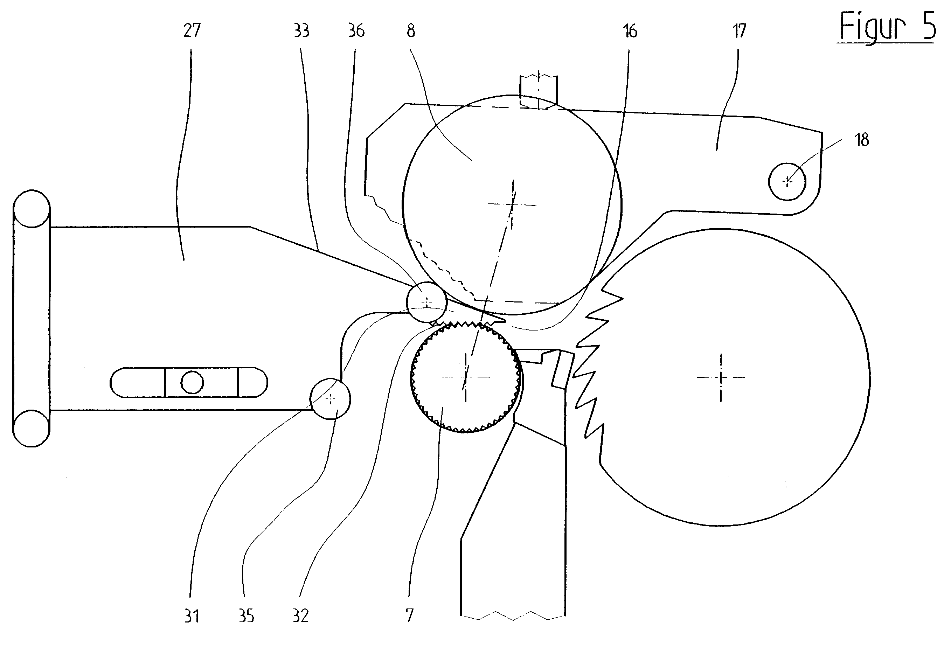

Das zum Schutz einer Bedienungsperson dienende Annäherungsschaltorgan besteht hier aus einem verschiebbaren Rahmen 25, der den Eingang des Einlaufschachtes 9 im wesentlichen umfaßt. An dem Rahmen 25 sind zwei Keilstücke 26/27 angebracht (siehe Figur 2, deren Wirkungsweise weiter unten im Zusammenhang mit den Figuren 4-6 näher erläutert ist). In Figur 2 ist nur das Keilstück 27 zu sehen, da es sich bei Figur 2 um einen Schnitt etwa durch die Mitte der dargestellten Granuliervorrichtung handelt. Die Keilstücke 26/27 sind über Langlochlagerungen 28 an der Frontplatte 2 der Granuliervorrichtung gegenüber dieser verschiebbar angebracht. Aus der in der Figur 3 dargestellten Draufsicht auf die Granuliervorrichtung gemäß Figur 2 ist ersichtlich, wie die beiden Keilstücke 26 und 27 über die Gegenwalze 7 (untere Einzugswalze) ragen. Sie befinden sich dabei in einer in der Figur 5 dargestellten Betriebslage. Die beiden Keilstücke 26 und 27 greifen dabei seitlich an dem Einlaufschacht 9 vorbei. Vor dem Eingang 29 des Einlaufschachtes 9 ist der den Eingang 29 umfassende Rahmen 25 angeordnet, an dem die beiden Keilstücke 26 und 27 befestigt sind. Bei Auftreffen einer Hand einer Bedienungsperson an dem Rahmen 25 wird dieser in Richtung auf den Eingang 29 des Einlaufschachtes 9 verschoben, so daß wie weiter unten im einzelnen näher dargelegt, die Spreizteile 30/31 der Keilstücke 26/27 zwischen die beiden Walzen 7 und 8 verschoben werden.

Die weiteren in der Figur 3 dargestellten Bauteile der Granuliervorrichtung entsprechen denjenigen Bauteilen gemäß Figur 2, die mit den gleichen Bezugszeichen versehen sind. Aus Gründen der Übersichtlichkeit der Darstellung sind in der Figur 3 die Einzugswalze 8, der Deckel 4 und die Schwingen 17 weggelassen.

In den Figuren 4-6 sind 3 Betriebsphasen der Wirkungsweise der Keilstücke 26/27 dargestellt (bezeichnet ist jeweils nur das Keilstück 27, da die Figuren 4-6 entsprechend dem Schnitt gemäß Figur 2 die in diesem Zusammenhang relevanten Bauteile zeigen).

Bei der Figur 4 handelt es sich um die Betriebsphase des ungehinderten Einlaufs der Stränge 13, die in den Figuren 4-6 aus Gründen der Übersichtlichkeit der Darstellung weggelassen sind (siehe jedoch Figur 2). In der Betriebsphase gemäß Figur 4 weist das Spreizstück 31 einen gewissen Abstand von dem Walzenspalt 16 auf, so daß das Spreizteil 31 keinen Einfluß auf die Walzen 7 und 8 ausüben kann. Von den Walzen 7 und 8 eingezogenen Stränge 13 (siehe Figur 2) können also ungehindert von den Einzugswalzen 7 und 8 eingezogen und der Messerwalze 5 zugeführt werden.

Erfolgt eine Verschiebung des Rahmens 25 (siehe Figur 2) z.B. durch eine Hand einer Bedienungsperson in Richtung auf die Granuliervorrichtung zu, so wird das Spreizteil 31 in den Walzenspalt 16 eingeschoben und durch Mitnahme von der unteren Einzugswalze 7 weiter in den Walzenspalt 16 geschoben. Zu diesem Zweck besitzt das Spreizteil 31 auf seiner der unteren Einzugswalze 7 zugewandten Seite eine Oberflächenstruktur, die derjenigen der unteren Einzugswalze 7 angepaßt ist. Die untere Einzugswalze 7 ist aus Gründen einer guten Mitnahme der zugeführten Stränge 13 (siehe Figur 2) mit einer Rändelung versehen, die in den Figuren 4-6 als eine Art Verzahnung dargestellt ist. Eine entsprechende Rändelung 32 nach Art einer Verzahnung besitzt das Spreizteil 31, so daß bei erfolgtem Eingriff die Rändelung 32 in die Rändelung der unteren Einzugswalze 7 das Spreizteil 31 zwischen die beiden Walzen 7 und 8 eingezogen wird. Aufgrund der keilförmigen Gestaltung der Spreizteile 30/31 wird die obere Einzugswalze von der glatten Rückseite 33 des Spreizteils 31 und des Keilstücks 27 angehoben, wobei die Schwingen 17 entsprechend um ihre Achse 18 verschwerkt werden. Damit erweitert sich schon mit geringfügigem Einbringen des Spreizteiles 31 der Walzenspalt 16, so daß auf die zwischen den Einzugswalzen 7 und 8 liegenden Stränge 13 kein Zug mehr ausgeübt werden kann, so daß diese auch infolge ihrer geringen Trägheit praktisch sofort stillstehen.

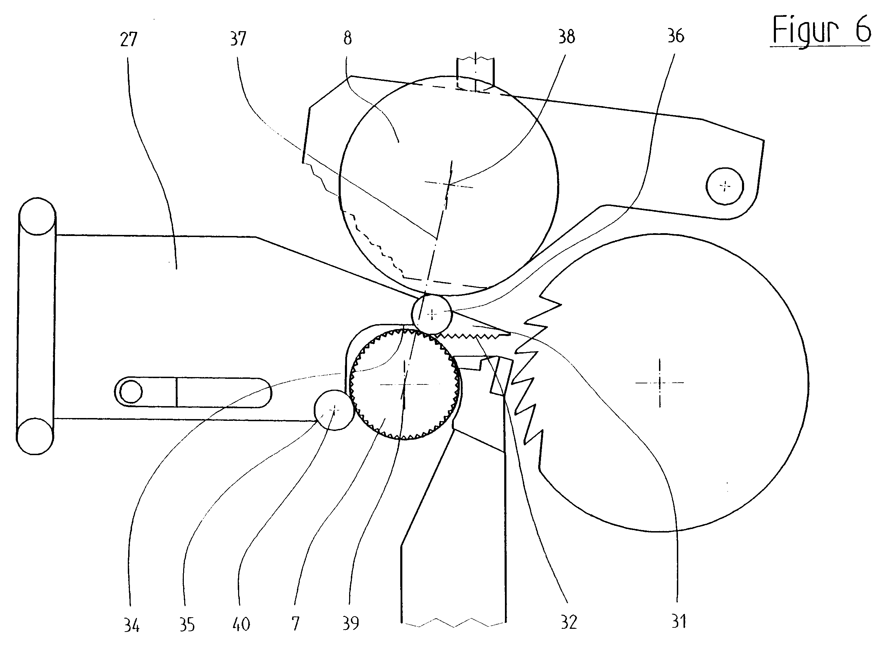

Die Einziehbewegung des Spreizteiles 31 setzt sich so lange fort, bis der gesamte Bereich der Rändelung 32 überlaufen ist, was in Figur 6 dargestellt ist. Am Ende der Rändelung 32 (in Richtung zu dem Rahmen 25) geht die Rändelung in eine glatte Vorderseite 34 über, womit die gerändelte Oberfläche der unteren Einzugswalze 7 praktisch keine wesentliche Reibung mehr auf das Keilstück 27 ausüben kann.

Um bei dieser Bewegung der Keilstücke 26/27 einerseits sicher zu stellen, daß die in Figur 6 dargestellte Endlage erreicht ist und außerdem diese Endlage auch nicht überlaufen werden kann, sind an den Keilstücken 26/27 die Rollen 35 und 36 vorgesehen, und zwar an jeder der beiden Keilstücke 26 und 27. Die Rolle 36 ist am Keilstück 27 im Bereich des Spreizteiles 31 angebracht und besitzt einen solchen Durchmesser, daß es in der Figur 6 dargestellten Lage gerade hinter der Verbindungslinie 37 zwischen den Achsen 38 und 39 der Einzugswalzen 7 und 8 liegt, wenn die Keilstücke 26/27 ihre Endlage erreicht haben. In dieser Lage wird die Rolle durch den von der oberen Einzugswalze 8 auf sie ausgeübten Druck gehalten, da sie bei einer Rückführung der Keilstücke 26/27 die obere Einzugswalze 8 anheben muß. Die in Figur 6 dargestellte Endlage der Keilstücke 26/27 wird durch die weitere Rolle 35 definiert, die sich in der dargestellten Endlage an die untere Einzugswalze 7 anlegt. Die Rolle 35 kann dabei von der weiterhin sich drehenden unteren Einzugswalze 7 mitgenommen werden, da sie drehbar auf der Achse 40 gelagert ist.

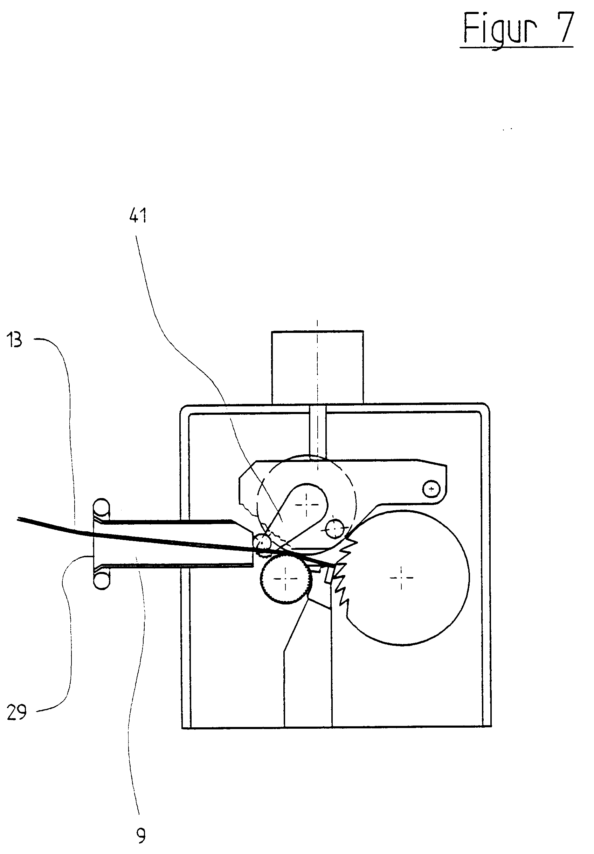

Figur 7 zeigt eine weitere Variante für die Methode der Vergrößerung des Walzenspaltes. Bei der Granuliervorrichtung gemäß Figur 7 sind hierfür Hebel 41 vorgesehen, die ähnlich den Keilstücken 26/27 gemäß Figur 3 im Bereich der beiden Seiten der Einzugsvorrichtung angeordnet sind. Aus Gründen der Übersichtlichkeit ist in der Figur 7 nur der Hebel 41 dargestellt, da es sich bei der Figur 7 um einen Schnitt durch die Granuliervorrichtung ähnlich demjenigen gemäß den Figuren 1 und 2 handelt. Bezüglich der mit gleichen Bezugszeichen versehenen Bauteilen aus Figur 7 und 1 wird auf die diesbezügliche Beschreibung zu Figur 1 verwiesen.

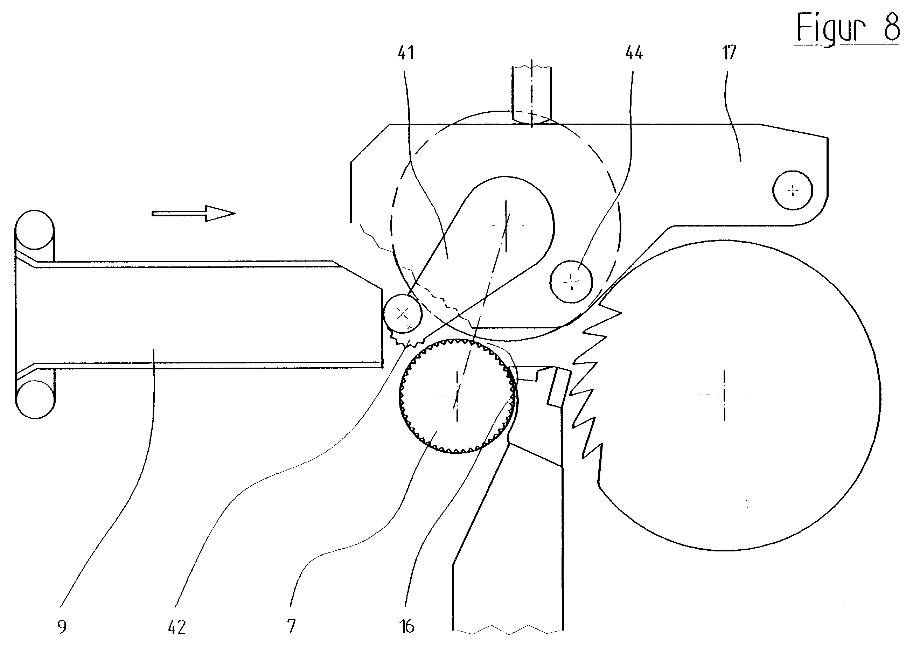

Zur Erläuterung der Betätigung der Hebel 41 sei auf die Figuren 8, 9 und 10 verwiesen, in denen drei Arbeitsphasen der Hebel dargestellt sind.

Gemäß Figur 8 befinden sich die Hebel 41 in ihrer Ruhelage, in der sie einen Abstand von der unteren Einzugswalze 7 einhalten, die wie die Einzugswalze gemäß den Figuren 2 bis 6 mit einer Rändelung versehen ist. Der Hebel 41 steht mit dem hier verschiebbar gelagerten Einlaufschacht 9 in Verbindung, von dem in den Figuren 8 bis 10 nur der in die Granuliervorrichtung hineinragende Teil dargestellt ist. Der Einlaufschacht 9 läßt sich von außen her nach innen in das Gehäuse der Granuliervorrichtung verschieben (siehe eingezeichneten Pfeil), z.B. durch eine Handhabung vor dem Eingang 29 des Einlaufschachtes 9. Bei einer solchen Verschiebung wird das der unteren Einzugswalze 7 zugewandte Ende 42 des Hebels 41 in Richtung auf die untere Einzugswalze 7 zu verschoben, bis das ebenfalls von einer Rändelung versehene Ende 42 mit der unteren Einzugswalze 7 in Eingriff gelangt.

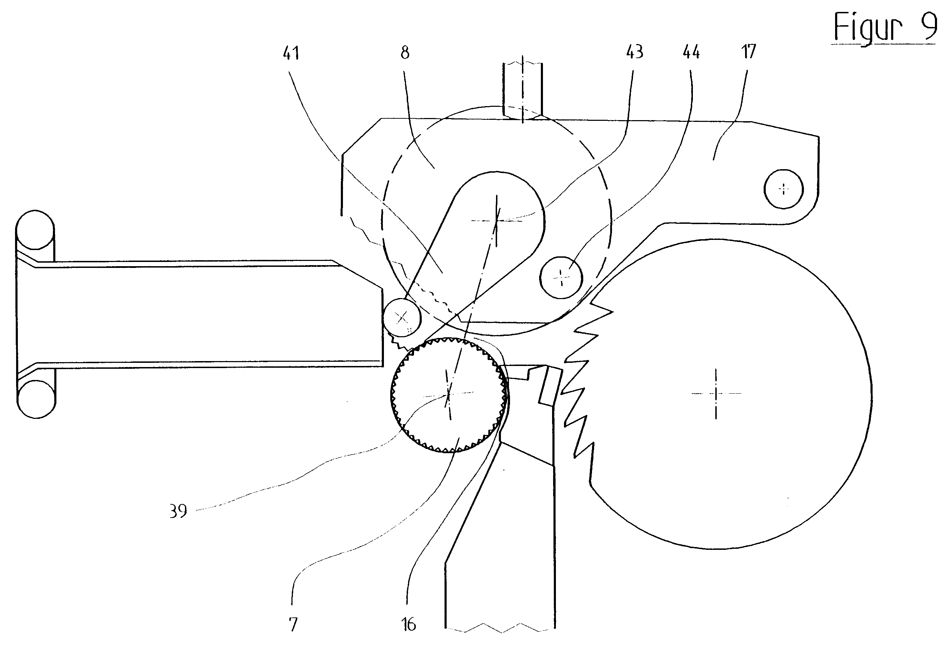

Diese Eingriffsposition ist in der Figur 9 dargestellt. Um in diese Position zu gelangen wurde der Hebel 41 um seine Achse 43 verschwenkt, die hier mit der Achse der oberen Einzugswalze 8 zusammenfällt. Es sei jedoch darauf hingewiesen, daß die Achse für die Hebel 41 auch anderweitig gelagert werden kann, wobei lediglich die Bedingung einzuhalten ist, daß, wie weiter unten weiter dargelegt, die Hebel 41 durch Eingriff in die untere Einzugswalze 7 von dieser so verschwenkt werden können, daß sie dabei die obere Einzugswalze 8 von der unteren Einzugswalze 7 abhebeln. Es muß also gewährleistet sein, daß die Hebel 41 diesbezüglich mit der Achse der oberen Einzugswalze 8 beziehungsweise der Schwinge 17 in Verbindung stehen.

Aufgrund des in der Figur 9 dargestellten Eingriffs des Endes 42 des Hebels 41 in die untere Einzugswalze 7 wird dieses Ende von der unteren Einzugswalze 7 aufgrund deren Drehung in eingezeichneter Pfeilrichtung mitgenommen, wobei sich die Achse 43 von der Achse 39 der unteren Einzugswalze 7 entfernt. Infolge dessen vergrößert sich auch der Walzenspalt 16, so daß vom Auftreffen des Endes 42 auf die untere Einzugswalze 7 sich dieser schlagartig vergrößert, womit die Förderung der zugeführten Stränge 13 schlagartig beendet wird.

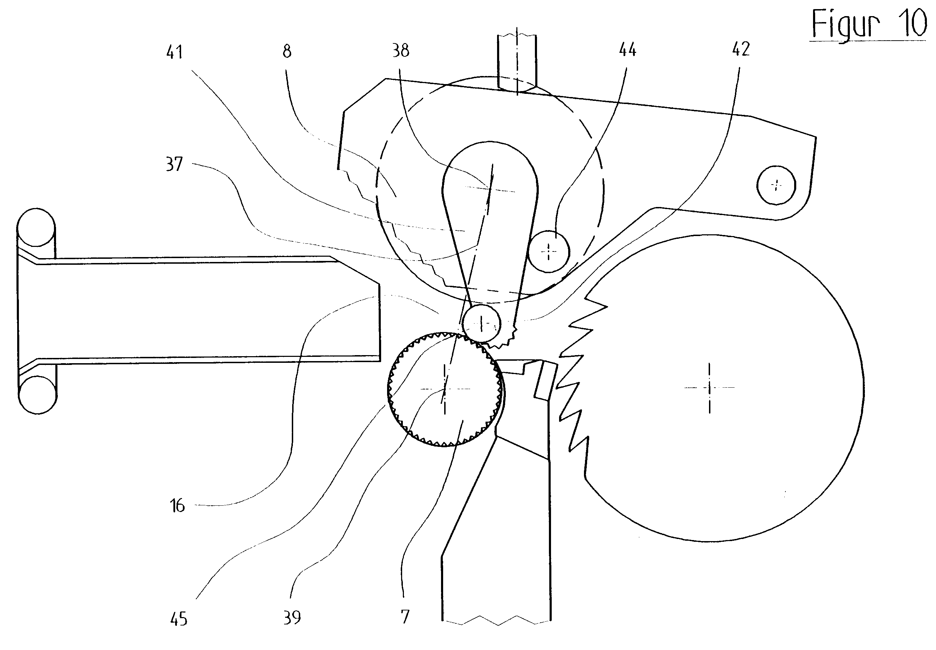

Die Verdrehung des Hebels 41 wird dann mit weiterer Mitnahme seines Endes 42 weitergeführt bis zu der in Figur 10 dargestellten Lage, in der der Hebel 41 gegen den Anschlag 44 anläuft und hier gestoppt wird. In dieser Position ist das Ende 42 des Hebels 41 von der Oberfläche der unteren Einzugswalze 7 abgehoben, so daß diese keine Reibung mehr auf das Ende 42 ausüben kann. In dieser Position setzt sich außerdem die im Bereich des Endes 42 angeordnete drehbar gelagerte Rolle 45 zwischen die untere Einzugswalze 7 und die obere Einzugswalze 8, und zwar derart, daß sie hinter der Verbindungslinie 37 zwischen den Achsen 38 und 39 zu liegen kommt. In dieser Lage wird die Rolle 45 ähnlich wie im Falle der Rolle 36 gemäß Figur 6 festgehalten. Auf diese Weise wird erreicht, daß, wenn einmal der Hebel 41 bis in seine Endlage verschwenkt worden ist, diese Position erhalten bleibt, wenn nicht anderweitig in die Maschine eingegriffen wird.

Bei der vorstehend dargestellten Anordnung wird also direkt durch eine z.B. von Hand bewirkte Verschiebung des Einlaufschachtes 9 der Mechanismus zur Vergrößerung des Walzenspaltes 16 in Tätigkeit gesetzt mit der Folge, daß dann schlagartig der weitere Einzug der Stränge 13 gestoppt wird.

Wenn der Fall des Abhebens der einen Einzugswalze von der anderen Einzugswalze eingetreten ist, wie dies im Zusammenhang mit den vorstehend genannten Ausführungsbeispielen beschrieben wurde, dann ist auf jeden Fall der kontinuierliche Granulationsbetrieb unterbrochen, weil der Einzug der Stränge gestoppt worden ist. Aufgrund dieser normalerweise auf eine Gefahrensituation zurückgehende Betriebsunterbrechung muß dann in jedem Falle der Granuliervorgang neu begonnen werden. Es kann dann in üblicher Weise wie z.B. für das Reinigen des Granulators dieser geöffnet werden, wobei dann seine einzelnen Bauteile in ihre Normallage zurückkehren, das heißt also, daß die beiden Einzugswalzen 7 und 8 zur Bildung des Einzugsspaltes wieder aneinander angenähert werden. Dabei gelangen dann die Schwingen 17 bzw. die Keilstücke 26/27 bzw. die Hebel 41 in ihre jeweilige Ausgangslage zurück.

## Patentansprüche

1. Granuliervorrichtung für Strangmaterialien (13) mit einer Einzugsvorrichtung zum Zuführen des durch einen Einlaufschacht (9) geleiteten Strangmaterials (13) und dessen Förderung zu einer Messerwalze (5) zum Zerschneiden des Strangmaterials (13) zu Granulat und mit einer in der Einzugsvorrichtung enthaltenen Einzugswalze (8) und einer Gegenwalze (7), von denen mindestens eine antreibbar ist und beide einen Walzenspalt (16) zum Einziehen des Strangmaterials (13) bilden, **dadurch gekennzeichnet**, daß im Bereich des Einlaufschachtes, insbesondere vor dessen Eingang (29), ein Annäherungsschaltorgan (14,15;25) angeordnet ist, das bei seiner Betätigung eine Festlegung des Walzenspaltes (16) aufhebt und den Walzenspalt (16) so weit vergrößert, daß das weitere Einziehen des Strangmaterials (13) schlagartig gestoppt ist.

2. Granuliervorrichtung nach Anspruch 1, dadurch gekennzeichnet, daß das Annäherungsschaltorgan (14,15;25) mit dem Einlaufschacht (9) in Verbindung steht, der einen Sicherheitsabstand zwischen der Einzugsvorrichtung (7,8) und dem Annäherungsschaltorgan (14,15;25) bestimmt.

3. Granuliervorrichtung nach Anspruch 2, dadurch gekennzeichnet, daß der Einlaufschacht (9) das Annäherungsschaltorgan bildet.

4. Granunliervorrichtung nach Anspruch 2, dadurch gekennzeichnet, daß das Annäherungsschaltorgan als den Eingang (29) des Einlaufschachts (9) im wesentlichen umfassender, in Schachtrichtung verschiebbarer Rahmen (25) ausgebildet ist.

5. Granuliervorrichtung nach einem der Ansprüche 1-4, **dadurch gekennzeichnet**, daß die Einzugswalze (8) verschiebbar ist und in ihre Parallelverschiebung ermöglichenden Verschiebungslagern (17) gelagert ist, und daß die Verschiebungslager (17) gegen einen Anschlag (20) durch eine Vorspannung angedrückt werden, die durch das Annäherungsschaltorgan (14,15) derart auslösbar ist, daß bei Betätigung des Annäherungsschaltorgans (14,15) die Vorspannung abgeschaltet und eine Gegenkraft wirksam wird, die die Verschiebungslager (17) vom Anschlag (20) und damit die verschiebbare Einzugswalze (8) von der Gegenwalze (7) abhebt.

6. Granuliervorrichtung nach Anspruch 5, dadurch gekennzeichnet, daß die Verschiebungslager als Schwingen (17) ausgebildet sind, auf die je eine von dem Annäherungsschaltorgan (14,15) steuerbare Kolbenzylinder-Einheit (10) wirkt.

7. Granuliervorrichtung nach Anspruch 5 oder 6, dadurch gekennzeichnet, daß die Gegenkraft von einer dem Anschlag (20) benachbart angeordneten Feder (12) erzeugt wird, deren Kraft von der Vorspannung überwunden wird.

8. Granuliervorrichtung nach einem der Ansprüche 1-4, dadurch gekennzeichnet, daß das Annäherungsschaltorgan mit auf die Walzen (7.8) zulaufenden Keilstücken (26,27) verbunden ist, die bei Verschiebung des Annäherungsschaltorgans (25) in Richtung zur Einzugsvorrichtung zwischen die Walzen (7,8) bzw. deren Wellen drücken und den Berührungskontakt des Strangmaterials (13) mit mindestens einer Walze (7,8) aufheben.

9. Granuliervorrichtung nach Anspruch 8, dadurch gekennzeichnet, daß bei Eingriff der Keilstücke (26,27) zwischen den Walzen (7,8) die angetriebene Walze (7) die Keilstücke (26,27) bis zu einem Anschlag (35) weiterzieht.

10. Granuliervorrichtung nach Anspruch 9, dadurch gekennzeichnet, daß die Keilstücke (26,27) auf ihrer der angetriebenen Walze (7) zuweisenden Seite mit einer Oberflächenstruktur (32) versehen sind, die form- bzw. reibschlüssig zu der Oberfläche der angetriebenen Walze (7) paßt, und daß bei Erreichen des Anschlages (35) der Form- bzw. Reibschluß zwischen der Oberflächenstruktur (32) und der betreffenden Oberfläche der angetriebenen Walze (7) aufgehoben ist.

11. Granuliervorrichtung nach Anspruch 1, dadurch gekennzeichnet, daß das Annäherungsschaltorgan (9) mit Hebeln (41) derart in Verbindung steht, daß deren eines Ende (42) von dem Annäherungsschaltorgan (9) auf die angetriebene Walze (7) zu bewegbar ist, von der diese Hebelenden (42) bei Berührung mit der angetriebenen Walze (7) in Richtung zum Walzenspalt (16) verschwenkt werden und dabei über einen Eingriff der Hebel (41) in die Lagerung der nichtangetriebenen Walze (8) diese von der angetriebenen Walze (7) abhebt.

12. Granuliervorrichtung nach Anspruch 11, dadurch gekennzeichnet, daß die Hebelenden (42) mit einer Oberflächenstruktur versehen sind, die derart form- bzw. reibschlüssig zu der Oberfläche der angetriebenen Walze (7) paßt, daß bei Eingriff der Hebelenden (42) in die angetriebene Walze (7) diese die Hebelenden (42) bis zu einem Anschlag (44) weiterschwenkt.

## Claims

1. Granulating device for strand materials (13), comprising a feed device for supplying the strand material (13) guided through an inlet shaft (9) and conveying it to a rotor (5) for cutting the strand material (13) into granules and comprising a feed roll (8) contained in the feed device and a mating roll (7), at least one of which can be driven and both forming a nip (16) for feeding the strand material (13), characterised in that a proximity switching member (14, 15; 25) is arranged in the region of the inlet shaft, in particular in front of the inlet (29) thereof, and, when actuated, eliminates the fixing of the nip (16) and increases the nip (16) to such an extent that further feeding of the strand material (13) is suddenly stopped.

2. Granulating device according to claim 1, characterised in that the proximity switching member (14, 15; 25) is connected to the inlet shaft (9) which determines the clearance required between the feed device (7, 8) and the proximity switching member (14, 15; 25).

3. Granulating device according to claim 2, characterised in that the inlet shaft (9) forms the proximity switching member.

4. Granulating device according to claim 2, characterised in that the proximity switching member is in the form of a frame (25) displaceable in the direction of the shaft and essentially embracing the inlet (29) of the inlet shaft (9).

5. Granulating device according to one of claims 1-4, characterised in that the feed roll (8) is displaceable and is supported in displacement bearings (17) allowing for the parallel displacement thereof and that the displacement bearings (17) are pressed against a stop (20) by means of pretension which can be triggered by means of the proximity switching member (14, 15) in such a manner that, when the proximity switching member (14, 15) is actuated, the pretension is removed and a counterforce takes effect and removes the displacement bearings (17) from the stop (20) and therefore the displaceable feed roll (8) from the mating roll (7).

6. Granulating device according to claim 5, characterised in that the displacement bearings are in the form of rockers (17) each acted upon by a piston/cylinder unit (10) which can be controlled by the proximity switching member (14, 15).

7. Granulating device according to claim 5 or claim 6, characterised in that the counterforce is produced by a spring (12) arranged adjacent to the stop (20), the force of said spring being overcome by the pretension.

8. Granulating device according to one of claims 1-4, characterised in that the proximity switching member is connected to wedge-shaped pieces (26, 27) tapering towards the rolls (7, 8), said wedge-shaped pieces pressing between the rolls (7, 8) or the shafts thereof when the proximity switching member (25) is displaced in the direction of the feed device and eliminating contact between the strand material (13) and at least one roll (7, 8).

9. Granulating device according to claim 8, characterised in that, when the wedge-shaped pieces (26, 27) engage between the rolls (7, 8), the driven roll (7) advances the wedge-shaped pieces (26, 27) as far as a stop (35).

10. Granulating device according to claim 9, characterised in that the wedge-shaped pieces (26, 27) are provided on their sides directed towards the driven roll (7) with a surface structure (32) which positively or non-positively matches the surface of the driven roll (7) and that, when the stop (35) is reached, the positive or non-positive connection between the surface structure (32) and the relevant surface of the driven roll (7) is eliminated.

11. Granulating device according to claim 1, characterised in that the proximity switching member (9) is connected to levers (41) in such a manner that one end (42) thereof can be moved by the proximity switching member (9) towards the driven roll (7), by which means these lever ends (42) are swivelled in the direction of the nip (16) when contact is made with the driven roll (7) and, when the levers (41) engage in the bearing arrangement of the non-driven roll (8), the latter is removed from the driven roll (7).

12. Granulating device according to claim 11, characterised in that the lever ends (42) are provided with a surface structure which positively or non-positively matches the surface of the driven roll (7) in such a manner that, when the lever ends (42) engage in the driven roll (7), the latter swivels the lever ends (42) on as far as a stop (44).

## Revendications

1. Dispositif de granulation pour des matériaux en forme de barres (13) comportant un dispositif d'alimentation pour amener le matériau en forme de barre (13) guidé par un conduit d'entrée (9), et convoyer ce matériau jusqu'à un cylindre porte-couteaux (5) pour sectionner le matériau en forme de barre (13) pour former des granulés, et comportant un cylindre d'alimentation (8) qui est contenu dans le dispositif d'alimentation, et un cylindre antagoniste (7), l'un au moins de ces cylindres pouvant être entraîné et les deux cylindres définissant une fente (16) pour l'introduction du matériau en forme de barre (13), caractérisé en ce que dans la zone du conduit d'entrée et notamment en amont de l'entrée (29) de ce conduit, est disposé un organe de commutation d'approche (14, 15 ; 25) qui lors de son actionnement, supprime un blocage de la fente (16) entre les cylindres et augmente la fente (16) entre les cylindres au point que la poursuite de l'introduction du matériau en forme de barre (13) est arrêtée brusquement.

2. Dispositif de granulation selon la revendication 1, caractérisé en ce que l'organe de commutation d'approche (14, 15) est relié au conduit d'entrée (9), qui détermine une distance de sécurité entre le dispositif d'alimentation (7, 8) de l'organe de commutation d'approche (14, 15 ; 25).

3. Dispositif de granulation selon la revendication 2, caractérisé en ce que le conduit d'entrée (9) forme l'organe de commutation d'approche.

4. Dispositif de granulation selon la revendication 2, caractérisé en ce que l'organe de commutation d'approche est agencé sous la forme d'un cadre (25) qui entoure essentiellement l'entrée (29) du conduit d'entrée (9) et est translatable dans la direction du conduit.

5. Dispositif de granulation selon l'une des revendications 1-4, caractérisé en ce que le cylindre d'alimentation (8) est translatable et est supporté dans des supports de translation (17) permettant la translation parallèle du cylindre, et que les supports de translation (17) repoussés contre une butée (20) par une précontrainte, qui peut être déclenchée par l'organe de commutation d'approche (14, 15) de telle sorte que lors de l'actionnement de l'organe de commutation d'approche (14, 15), la précontrainte est supprimée et une force antagoniste est appliquée, force qui écarte les supports de translation (17) de la butée (20) et par conséquent écarte le cylindre translatable d'alimentation (8) du cylindre antagoniste (7);

6. Dispositif de granulation selon la revendication 5, caractérisé en ce que les supports de translation sont agencés sous la forme de leviers basculants (17), sur chacun desquels agit une unité respective formant vérin (10) pouvant être commandée par l'organe de commutation d'approche (14, 15).

7. Dispositif de granulation selon la revendication 5 ou 6, caractérisé en ce que la force antagoniste est produite par un ressort (12), qui est disposé au voisinage de la butée (20) et dont la force est vaincue par la précontrainte.

8. Dispositif de granulation selon l'une des revendications 1-4, caractérisé en ce que l'organe de commutation d'approche est relié à des pièces en coin (26, 27), qui convergent en direction des cylindres (7, 8) et qui, lors de la translation de l'organe de commutation d'approche (25) dans la direction d'alimentation, appliquent une poussée entre les cylindres (7, 8) ou leurs arbres et suppriment le contact du matériau en forme de barre (13) avec au moins un cylindre (7, 8).

9. Dispositif de granulation selon la revendication 8, caractérisé en ce que lors de l'engagement des pièces en coin (26, 27) entre les cylindres (7, 8), le cylindre entraîné (7) continue à entraîner les pièces en coin (26, 27) jusqu'à une butée (35).

10. Dispositif de granulation selon la revendication 9, caractérisé en ce que les pièces en coin (26, 27) comportent, sur leur côté tourné vers le cylindre entraîné (7), une structure superficielle (32), qui engrène selon une liaison par formes complémentaires ou selon une liaison par frottement avec la surface du cylindre entraîné (7), et que lorsque la butée (35) est atteinte, la liaison par formes complémentaires ou la liaison par frottement entre la structure superficielle (32) et la surface concernée du cylindre entraîné (7) est supprimée.

11. Dispositif de granulation selon la revendication 1, caractérisé en ce que l'organe de commutation d'approche (9) est relié à des leviers (41) de telle sorte qu'une de ses extrémités (42) est déplaçable depuis l'organe de commutation d'approche (9) en direction du cylindre entraîné (7), qui fait pivoter ces extrémités (42) des leviers en direction de la fente (16) entre les cylindres, lors du contact avec le cylindre entraîné (7), et écarte le cylindre non entraîné (8) du cylindre entraîné (7) par l'intermédiaire d'un engagement des leviers (41) dans le système de support du cylindre non entraîné.

12. Dispositif de granulation selon la revendication 11, caractérisé en ce que les extrémités (42) des leviers sont équipées d'une structure superficielle, qui engrène selon une liaison par formes complémentaires ou selon une liaison par frottement avec la surface du cylindre entraîné (7) de telle sorte que, lors de l'engagement des extrémités (42) des leviers contre le cylindre entraîné (16), ce cylindre continue à faire basculer les extrémités (42) des leviers jusque contre une butée (44).
